# EUROPÄISCHE PATENTANMELDUNG

(11) **EP 3 498 746 A1**
(43) Veröffentlichungstag der Anmeldung: **19.06.2019**
(21) Anmeldenummer: 17206870.2
(22) Anmeldetag: 13.12.2017
(51) Int. Cl.: C08G 18/56, C08G 18/10, C08G 18/76

(54) **VERFAHREN ZUR HERSTELLUNG VON POLYURETHANPOLYMEREN**

(71) Anmelder: Covestro Deutschland AG, 51373 Leverkusen (DE)
(72) Erfinder: GÜRTLER, Christoph, 50735 Köln (DE); MÜLLER, Thomas Ernst, 52074 Aachen (DE); BIZZARRI, Claudia, 75137 Karlsruhe (DE); LEVEN, Matthias, 51069 Köln (DE); LEITNER, Walter, 52074 Aachen (DE)
(74) Vertreter: Levpat

(57) **Zusammenfassung**

Die vorliegende Erfindung betrifft ein Verfahren zur Herstellung eines Polyurethanpolymers, umfassend den Schritt der Reaktion einer Polyolkomponente mit einer Polyisocyanatkomponente, wobei die Polyolkomponente ein Polyoxymethylen-Block-Copolymer umfasst. Sie betrifft ebenfalls ein durch das erfindungsgemäße Verfahren erhältliche Polyurethan mit einer Kristallinität, bestimmt durch Differenzkalorimetrie, von ≥ 9%. Ein weiterer Gegenstand der Erfindung ist die Verwendung eines erfindungsgemäßen Polyurethanpolymers als thermoplastischer Werkstoff.

## Beschreibung

Die vorliegende Erfindung betrifft ein Verfahren zur Herstellung eines Polyurethanpolymers, umfassend den Schritt der Reaktion einer Polyolkomponente mit einer Polyisocyanatkomponente, wobei die Polyolkomponente ein Polyoxymethylen-Block-Copolymer umfasst. Sie betrifft ebenfalls ein durch das erfindungsgemäße Verfahren erhältliche Polyurethan mit einer Kristallinität, bestimmt durch Differenzkalorimetrie, von ≥ 9%. Ein weiterer Gegenstand der Erfindung ist die Verwendung eines erfindungsgemäßen Polyurethanpolymers als thermoplastischer Werkstoff.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als C₁-Bausteine kommt insbesondere Formaldehyd in Frage. Formaldehyd ist nicht an die Verfügbarkeit von Erdöl gebunden und ist in großen Mengen gut zugänglich. Ein wichtiges Einsatzfeld für Formaldehyd ist die Herstellung von polymeren Materialien auf Basis von Polyoxymethylen (POM).

WO 2014/095679 A1 beschreibt ein Verfahren zur Herstellung von NCO-modifizierten Polyoxymethylen-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Polyoxymethylen-Copolymer erhalten wird. Es werden Polyisocyanate als mögliche Reagenzien zur NCO-Modifizierung genannt. Die Beispiele dieser Patentanmeldung offenbaren jedoch lediglich Tolylisocyanat, ein Monoisocyanat. Die Herstellung von Polyurethanen ist nicht belegt; der Einfluss auf die Eigenschaften von Polyurethanen wird ebenfalls nicht beschrieben.

Im Zusammenhang mit thermoplastischen Polyurethanen ist der Kristallisationsgrad der Materialien von großer Bedeutung. EP 2 316 866 A1 beschäftigt sich beispielsweise mit wässrigen Zusammensetzungen, enthaltend (a) wenigstens ein kristallines oder semikristallines Polyurethanpolymer, (b) wenigstens ein Polyisocyanat mit aliphatisch gebundenen Isocyanatgruppen, (c) wenigstens eine oder mehrere Verbindungen von Elementen der 5. und 6. Nebengruppe des Periodensystems, in denen das jeweilige Element eine Oxidationsstufe von mindestens +4 hat und (d) gegebenenfalls weitere Zusatzstoffe und Hilfsmittel.

WO 2014/070426 A1 offenbart thermoplastische Polyurethane mit kristallinen Seitenketten.

WO 03/057752 A1 betrifft eine extrudierte thermoplastische Polyurethanzusammensetzung, die einen hohen Gehalt an kristallinen Phasen aufweist und das Reaktionsprodukt einer Kombination von Folgenden umfasst: einer Polyolkomponente, wobei die Polyolkomponente ein Zahlenmittel des Molekulargewichts von 500 bis 10 000 pro Polyol aufweist und wobei die Polyolkomponente in einer solchen Menge verwendet wird, dass der Gehalt an Hydroxygruppen 2 bis 70 Äquivalente pro 100 Äquivalente der gesamten, in der Zusammensetzung vorhandenen Hydroxygruppen beträgt; einer Diisocyanatkomponente; einer Kettenverlängererkomponente, wobei die Kettenverlängererkomponente ein unverzweigtes, unsubstituiertes, geradkettiges Alkandiol ohne Heteroatome, das 2 bis 6 Kohlenstoffatome aufweist, ist; einer kristallisationsverzögernden Komponente, die aus Dipropylenglycol, Neopentylglycol, 2-Methyl-2,4-pentandiol oder einer Kombination davon ausgewählt ist, wobei die kristallisationsverzögernde Komponente in einer solchen Menge verwendet wird, dass der Gehalt an Hydroxygruppen 1 bis 15 Äquivalente pro 100 Äquivalente der gesamten Hydroxygruppen der Polyolkomponente, der Kettenverlängererkomponente und der kristallisationsverzögernden Komponente beträgt; und gegebenenfalls einem Polyurethankatalysator; wobei die Zusammensetzung extrudiert ist und wobei die Zusammensetzung einen Gehalt an harten Segmenten von 30 bis 70% aufweist.

Zur Erhöhung der Kristallinität können vergleichsweise hohe Gehalte an Polyisocyanaten in der Herstellung der Polyurethane eingesetzt werden. Alternativ oder ergänzend dazu können zur Erhöhung des Anteils der Hartsegmente im Polyurethan auch kurzkettige Diole wie 1,4-Butandiol mit einpolymerisiert werden. Insbesondere die kurzkettigen Diole sind jedoch kostspielig.

Die vorliegende Erfindung hat sich die Aufgabe gestellt, ein Verfahren zur Herstellung von teilkristallinen Polyurethanen bereitzustellen, bei dem eine geringe Menge an Polyisocyanaten erforderlich ist und welches ohne kurzkettige Diole auskommt.

Erfindungsgemäß gelöst wird diese Aufgabe durch ein Verfahren zur Herstellung eines Polyurethanpolymers, umfassend den Schritt der Reaktion einer ersten Polyolkomponente mit einem Polyoxymethylen-Gruppen enthaltenden NCO-terminierten Präpolymer, wobei
das Prepolymer erhältlich ist aus einem Verfahren umfassend den Schritt der Reaktion einer zweiten Polyolkomponente mit einem ersten Polyisocyanat,
wobei die zweite Polyolkomponente ein OH-Endgruppen enthaltendes Polyoxymethylen umfasst
und die Reaktion in Gegenwart einer Fluorverbindung durchgeführt wird,
das Präpolymer eine Polyoxymethylenkette mit im Durchschnitt ≥ 7 miteinander verbundenen Oxymethylengruppen aufweist.

Ohne auf eine Theorie festgelegt zu sein wird angenommen, dass die Polyoxymethylen-Gruppen zu (semi)kristallinen Domänen im Polyurethanpolymer führen. Wasserstoffbrückenbindungen im Urethansegment dienen dabei zur Vororientierung für die kristalline Anordnung der Polyoxymethylen-Blöcke.

Es lassen sich so Nylon-ähnliche Materialien erhalten mit kristallinen und amorphen Domänen. Die amorphen Domänen werden hierbei durch diejenigen Gruppen des Block-Copolymers gebildet, welche nicht Polyoxymethylengruppen sind. Insbesondere sind solche Gruppen Polyetherblöcke.

Im erfindungsgemäß einzusetzenden Präpolymer sind im Durchschnitt ≥ 7 Oxymethylengruppen miteinander verbunden. Vorzugsweise sind es ≥ 7 bis ≤ 20, mehr bevorzugt ≥ 8 bis ≤ 15. Ihr Gehalt lässt sich aus der Menge der in der Herstellung des Präpolymers verbrauchten Formaldehyd-Äquivalente oder mittels Auswertung der Integrale im ¹H-NMR-Spektrum bei bekannten Resonanzen eines anderen Blocks im Copolymer, beispielsweise Polyethylenoxidblöcken, bestimmen.

Kristallin oder semikristallin bedeutet im Zusammenhang der vorliegenden Erfindung, dass bei der DSC-Analyse der Polyurethanpolymere mit aufsteigender Temperatur ein Maximum durchlaufen wird, das durch das Aufschmelzen regelmäßiger Teilstrukturen im Polymer verursacht wird.

Ausführungsformen und weitere Aspekte der vorliegenden Erfindung werden nachfolgend erläutert. Sie können beliebig miteinander kombiniert werden, sofern sich aus dem Kontext nicht eindeutig das Gegenteil ergibt.

In einer Ausführungsform des erfindungsgemäßen Verfahrens ist das Präpolymer erhältlich durch ein Verfahren umfassend den Schritt der Reaktion einer dritten Polyolkomponente mit einem zweiten Polyisocyanat, wobei die dritte Polyolkomponente ein OH-Endgruppen enthaltendes Polyoxymethylen umfasst, dessen OH-Endgruppen nicht Teil von Carboxylgruppen sind, die Reaktion in Gegenwart einer ionischen Fluorverbindung durchgeführt wird, wobei die ionische Fluorverbindung eine koordinativ gesättigte Verbindung ist, wobei die ionische Fluorverbindung einen Fluor-Massenanteil von größer als 20 Gewichts-% Fluor, bezogen auf die molekulare Masse der anionischen Komponente aufweist.

In einer weiteren Ausführungsform des erfindungsgemäßen Verfahrens weist das Präpolymer ein zahlenmittleres Molekulargewicht von ≤ 8000 g/mol auf.

In einer weiteren Ausführungsform des erfindungsgemäßen Verfahrens umfasst die erste Polyolkomponente ein Polyol, das ausgewählt ist aus der Gruppe der Polyetherpolyole, Polyesterpolyole, Polyetheresterpolyole, Polycarbonatpolyole und/oder Polyacrylatpolyole.

Die durchschnittliche OH-Funktionalität der Polyole ist ≥ 2.2, beispielsweise in einem Bereich von ≥ 2.2 bis ≤ 6, vorzugsweise von ≥ 2,2 bis ≤ 4 und mehr bevorzugt von ≥ 2,2 bis ≤ 3.

Bevorzugt sind Polyethylenglykole, Polypropylenglykole und gemischte Polyethylen/propylenglykole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten Mn von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer weiteren Ausführungsform des erfindungsgemäßen Verfahrens beträgt der Anteil des Präpolymers, bezogen auf das Gesamtgewicht der an der Reaktion teilnehmenden Komponenten, ≤ 6 Gewichts-%. Bevorzugt sind ≥ 1 Gewichts-% bis ≤ 6 Gewichts-%, mehr bevorzugt sind ≥ 2 Gewichts-% bis ≤ 3 Gewichts-%.

In einer weiteren Ausführungsform des erfindungsgemäßen Verfahrens umfasst die erste oder zweite Polyisocyanatkomponente Toluylendiisocyanat und/oder Methylendiphenyldiisocyanat.

In einer weiteren Ausführungsform des erfindungsgemäßen Verfahrens wird die Reaktion bei einem NCO-Index von ≥ 90 bis ≤ 160 durchgeführt. Bevorzugt ist ein Index von ≥ 100 bis ≤ 150.

In einer weiteren Ausführungsform des erfindungsgemäßen Verfahrens wird im Anschluss an die Reaktion der Schritt durchgeführt:
- Isolieren eines Polyurethans mit einer Kristallinität, bestimmt durch Differenzkalorimetrie, von ≥ 9%.

Die Bestimmung der Kristallinität wird im experimentellen Teil ausführlich erläutert. Vorzugsweise beträgt dieser Kristallinitätsgrad ≥ 9% bis ≤ 30%, mehr bevorzugt ≥ 9% bis ≤ 20%.

Es ist zur Ausbildung einer Orientierung im erhaltenen Polymer möglich, dass das isolierte Polyurethan anschließend verstreckt wird.

In einer weiteren Ausführungsform des erfindungsgemäßen Verfahrens enthält die Polyolkomponente keine Diole mit ≤ 6 C-Atomen. Insbesondere ist hierbei das kostspielige 1,4-Butandiol ausgeschlossen.

Ein weiterer Gegenstand der vorliegenden Erfindung ist ein Polyurethanpolymer, erhältlich durch ein erfindungsgemäßes Verfahren, mit einer Kristallinität, bestimmt durch Differenzkalorimetrie, von ≥ 9%. Vorzugsweise beträgt dieser Kristallinitätsgrad ≥ 9% bis ≤ 30%, mehr bevorzugt ≥ 9% bis ≤ 20%.

In einer weiteren Ausführungsform des erfindungsgemäßen Polyurethanpolymers weist dieses ein zahlenmittleres Molekulargewicht (GPC) von ≥ 5000 g/mol auf. Vorzugsweise beträgt dieses ≥ 5000 g/mol bis ≤ 15000 g/mol, mehr bevorzugt ≥ 7000 g/mol bis ≤ 13000 g/mol.

In einer weiteren Ausführungsform des erfindungsgemäßen Polyurethanpolymers weist dieses einen Anteil an im Polymer eingebauten Polyisocyanaten, bezogen auf das Gesamtgewicht des Polymers, von ≥ 6 Gewichts-% auf. Bevorzugt sind ≥ 1 Gewichts-% bis ≤ 6 Gewichts-%, mehr bevorzugt sind ≥ 2 Gewichts-% bis ≤ 3 Gewichts-%.

In einer weiteren Ausführungsform des erfindungsgemäßen Polyurethanpolymers weist dieses einen Schmelzpunkt (DSC) von ≤ 120 °C auf. Bevorzugt ist ein Schmelzpunkt von ≥70 °C bis ≤ 120 °C, mehr bevorzugt von ≥ 80 °C bis ≤ 110 °C.

Die vorliegende Erfindung betrifft weiterhin die Verwendung eines erfindungsgemäßen Polyurethanpolymers als thermoplastischer Werkstoff.

### Beispiele

### Eingesetzte Polyole

Polyol-1 Formaldehyd-haltiges Diol erhalten aus Trioxan mit einer Massenanteiligen Zusammensetzung von 43 % Propylenoxid, 41 % Formaldehyd, und 16 % Ethylenoxid. Die molekulare Masse betrug 5147 g/mol.

Polyol-2 Formaldehyd-haltiges Diol erhalten aus Trioxan mit einer Massenanteiligen Zusammensetzung von 39 % Propylenoxid, 42 % Formaldehyd, und 19 % Ethylenoxid. Die molekulare Masse betrug 7794 g/mol.

### Eingesetzte Polyisocyanate

### TDI 2,4-Tolyldiisocyanat

### Beschreibung der Methoden:

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Chloroform (GPC grade), Flussrate 1.0 ml/min; Säulenkombination: PSS SDV Vorsäule 8x50 mm (5 µm), 2x PSS SDV linear S 8x300 ml (5 µm). Polypropylenglykolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

¹H-NMR-Spektroskopie: Die Messungen erfolgten auf einem Bruker AV400 (400 MHz); die Kalibrierung der chemischen Verschiebungen erfolgte relativ zum Lösungsmittelsignal (CDCl₃, δ = 7,26 ppm); s = Singulett, m = Multiplett, bs = verbreitertes Singulett, kb = komplexer Bereich.

Die Bestimmung der Viskosität erfolgte auf einem Physica MCR 501 Rheometer der Fa. Anton Paar. Es wurde eine Kegel-Platte-Konfiguration mit einem Abstand von 50 µm gewählt (Messsystem DCP25). 0,1 g der Substanz wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

TGA (Thermogravimetrische Analysen) wurden mit einem Mettler Toledo TGA/DSC 1 durchgeführt. Es wurden zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Der Kristallinitätsgrad wurde per DSC (diffential scanning calorimetry) ebenfalls auf diesem Gerät ermittelt. Hierzu wurden die Schmelzenthalpien der Proben gemessen und mit der Kristallinität des Ausgangs-Polyols referenziert.

## Patentansprüche

1. Verfahren zur Herstellung eines Polyurethanpolymers, umfassend den Schritt der Reaktion einer ersten Polyolkomponente mit einem Polyoxymethylen-Gruppen enthaltenden NCO-terminierten Präpolymer,
**dadurch gekennzeichnet, dass**
das Prepolymer erhältlich ist aus einem Verfahren umfassend den Schritt der Reaktion einer zweiten Polyolkomponente mit einem ersten Polyisocyanat,
wobei die zweite Polyolkomponente ein OH-Endgruppen enthaltendes Polyoxymethylen umfasst
und die Reaktion in Gegenwart einer Fluorverbindung durchgeführt wird,
das Präpolymer eine Polyoxymethylenkette mit im Durchschnitt ≥ 7 miteinander verbundenen Oxymethylengruppen aufweist.

2. Verfahren gemäß Anspruch 1, wobei das Präpolymer erhältlich ist durch ein Verfahren umfassend den Schritt der Reaktion einer dritten Polyolkomponente mit einem zweiten Polyisocyanat,
wobei die dritte Polyolkomponente ein OH-Endgruppen enthaltendes Polyoxymethylen umfasst, dessen OH-Endgruppen nicht Teil von Carboxylgruppen sind,
die Reaktion in Gegenwart einer ionischen Fluorverbindung durchgeführt wird,
wobei die ionische Fluorverbindung eine koordinativ gesättigte Verbindung ist,
wobei die ionische Fluorverbindung einen Fluor-Massenanteil von größer als 20 Gewichts-% Fluor, bezogen auf die molekulare Masse der anionischen Komponente aufweist.

3. Verfahren gemäß Anspruch 1 oder 2, wobei das Präpolymer ein zahlenmittleres Molekulargewicht von ≤ 8000 g/mol aufweist.

4. Verfahren gemäß Anspruch 2 oder 3, wobei die erste Polyolkomponente ein Polyol umfasst, das ausgewählt ist aus der Gruppe der Polyetherpolyole, Polyesterpolyole, Polyetheresterpolyole, Polyethercarbonatpolyole, Polycarbonatpolyole und/oder Polyacrylatpolyole.

5. Verfahren gemäß einem der Ansprüche 1 bis 4, wobei der Anteil des Präpolymers, bezogen auf das Gesamtgewicht der an der Reaktion teilnehmenden Komponenten, ≤ 6 Gewichts-% beträgt.

6. Verfahren gemäß einem der Ansprüche 1 bis 5, wobei die erste oder zweite Polyisocyanatkomponente ein Toluylendiisocyanat und/oder Methylendiphenyldiisocyanat umfasst.

7. Verfahren gemäß einem der Ansprüche 1 bis 6, wobei die Reaktion bei einem NCO-Index von ≥ 90 bis ≤ 160 durchgeführt wird.

8. Verfahren gemäß einem der Ansprüche 1 bis 7, wobei im Anschluss an die Reaktion der Schritt durchgeführt wird:
- Isolieren eines Polyurethans mit einer Kristallinität, bestimmt durch Differenzkalorimetrie, von ≥ 9%.

9. Verfahren gemäß Anspruch 8, wobei das isolierte Polyurethan anschließend verstreckt wird.

10. Verfahren gemäß einem der Ansprüche 1 bis 9, wobei die erste Polyolkomponente keine Diole mit ≤ 6 C-Atomen enthält.

11. Polyurethanpolymer, erhältlich durch ein Verfahren gemäß einem der Ansprüche 1 bis 10, mit einer Kristallinität, bestimmt durch Differenzkalorimetrie, von ≥ 9%.

12. Polyurethanpolymer gemäß Anspruch 11 mit einem zahlenmittleren Molekulargewicht von ≥ 5000 g/mol.

13. Polyurethanpolymer gemäß Anspruch 11 oder 12 mit einem Anteil an im Polymer eingebauten Polyisocyanaten, bezogen auf das Gesamtgewicht des Polymers, von ≥ 6 Gewichts-%.

14. Polyurethanpolymer gemäß einem der Ansprüche 11 bis 13 mit einem Schmelzpunkt von ≤ 120 °C.

15. Verwendung eines Polyurethanpolymers gemäß einem der Ansprüche 11 bis 14 als thermoplastischer Werkstoff.
